# EUROPÄISCHE PATENTSCHRIFT

(11) **EP 1 037 161 B1**
(45) Veröffentlichungstag und Bekanntmachung des Hinweises auf die Patenterteilung: **10.11.2010**
(21) Anmeldenummer: 00104994.9
(22) Anmeldetag: 09.03.2000
(51) Int. Cl.: G06K 7/00, G06K 13/08, G01P 1/07, G01P 1/12, G07C 7/00

(54) **Lese-/Schreibaggregat für Datenkarten**
Read/write unit for data cards
Unité de lecture/écriture pour cartes de données

(30) Priorität: 16.03.1999 DE 29904801 U
(43) Veröffentlichungstag der Anmeldung: 20.09.2000
(73) Patentinhaber: Continental Automotive GmbH, 30165 Hannover (DE)
(72) Erfinder: Burkart, Harald, Dipl.-Ing., 78054 Villingen-Schwenningen (DE)

(56) Entgegenhaltungen:
- DE-U- 29 603 156
- DE-U- 29 822 141
- GB-A- 2 323 953

## Beschreibung

Die Erfindung betrifft ein Gerät, umfassend ein Lese-/Schreibaggregat für Datenkarten mit einem dem Transport der Datenkarten zwischen einer Eingabe-/Entnahmeposition und einer Lese-/Schreibposition dienenden, in seitlichen Führungen gelagerten Schlitten, welcher in der Eingabe-/Entnahmeposition teilweise aus einer Frontwand des Gerätes herausragt und in der Lese-/Schreibposition verriegelt ist und an welchem Schlitten frontseitig eine Blende angeordnet ist, mit der die Durchtrittsöffnung des Schlittens in der Frontwand abdeckbar ist.

Wird beispielsweise ein Lese-/Schreibaggregat für Datenkarten entweder integriert in einem Fahrtschreiber oder als autonomes, beispielsweise mit einem Fahrtschreiber korrespondierendes Aggregat im Fahrerhaus eines Nutzfahrzeuges eingesetzt, so ist es wegen oft ungünstiger Einbau- oder Anordnungssituationen, schlechter Lichtverhältnisse und der erhöhten Dichte von Instrumenten und Betätigungselementen im haptischen Bereich des Fahrers nicht besonders handhabungsfreundlich, wenn lediglich ein Schlitz für das Eingeben von Datenkarten vorgesehen ist. Andererseits besteht in dem genannten Anwendungsmilieu eine erhebliche Verschmutzungsgefahr, so daß Maßnahmen erforderlich sind, die ein Eindringen von Staub und Wasser in das Lese-/Schreibaggregat zumindest erschweren, das heißt, die Zugangs- beziehungsweise Eingabeöffnung abdecken, wobei durch ein Verriegeln der Abdeckung auch Manipulationen weitgehend ausgeschlossen sind. Außerdem erfordert die Anwendung in einem Fahrzeug eine konstruktiv einfache und somit ausfallsichere sowie aufwandminimierte Lösung der geschilderten Problematik.

In den Druckschriften DE 298 22 141 U1 und GB 2 323 953 A sind Lese-/Schreibaggregate beschrieben, die jeweils einen Schlitten für Datenkarten aufweisen, um ein leichtes Einführen der Datenkarten zu ermöglichen, während eine vom Schlitten unabhängige bewegliche Abdeckung für eine Eingabeöffnung vorgesehen ist, die die Eingabeöffnung gegen ein Eindringen von Schmutz schützt. Dabei ist allerdings jeweils ein verhältnismäßig aufwendig gestalteter mechanischer Antrieb für die Abdeckung notwendig, um eine mit einer Bewegung des Schlittens synchronisierte Öffnungs- und Schließbewegung der Abdeckung zu steuern. Der Stand der Technik aus den genannten Druckschriften löst also noch nicht die Aufgabe, ein entsprechendes Lese-/Schreibgerät mit geringem Aufwand zu realisieren.
Mit der DE-U-296 03 156.9 wird dementsprechend vorgeschlagen den Datenkarten eine mit Riegeln versehene und durch Betätigen einer Taste freigebbare Schublade, das heißt, einen Träger mit einer in geeigneter Weise ausgebildeten Fassung für die Datenkarten, an dem stirnseitig eine Frontwand angeformt ist, zuzuordnen. Eine derartige Schublade muß, damit eine Datenkarte, ohne sie elastisch verformen zu müssen, eingelegt werden kann, relativ weit aus dem betreffenden Fahrtschreiber herausgeführt werden. Dies macht zur Erzielung einer ausreichenden Führungsqualität und Halterung im geöffneten Zustand eine erhebliche Führungslänge und somit Bautiefe erforderlich. Außerdem müssen, um die beim Einlegen einer Datenkarte an der Schublade aufgrund des langen Hebelarmes gegebenenfalls entstehenden erheblichen Kräfte auffangen zu können, sowohl die Schublade als auch deren Führungsmittel in geeigneter Weise jedenfalls mit einem erhöhten Aufwand ausgebildet sein. Ein wesentlicher Nachteil der Lösung gemäß der DE-U-296 03 156.9 ist jedoch dadurch gegeben, daß die Schublade in der Einlege-/Entnahmeposition weit aus dem Fahrtschreiber herausragt und somit die Gefahr des Hängenbleibens und Beschädigens besteht, andererseits ein Beschädigen in betrügerischer Absicht provoziert wird.

Die Aufgabe der vorliegenden Erfindung bestand somit darin, unter Beibehaltung der Vorteile einer Schubladenlösung gemäß der DE-U-296 03 156.9, das heißt, unter Beibehaltung des eingriffs- und verschmutzungssicheren Abdeckens der Eingabeöffnung von außen, das Eingeben von Datenkarten in ein Lese-/Schreibaggregat zu erleichtern und die Funktionssicherheit der beim Eingeben einer Datenkarte zusammenwirkenden Mittel zu erhöhen.

Die Lösung der Aufgabe beschreibt der Schutzanspruch 1. Zweckmäßige Weiterbildungen der Erfindung gehen aus den Unteransprüchen hervor.

Der besondere Vorzug der Erfindung ist in der Kombination einer Schublade, deren als Blende bezeichnete Frontwand die Dichtfunktion und die Zugangssicherung gewährleistet, mit einer ungehindert zugänglichen, gut sichtbaren und gegebenenfalls eine markante Farbe aufweisenden Auflage zum Aufsetzen und Einschieben der Datenkarten zu sehen. Hinzu kommt, daß das Verschwenken der Blende sowohl beim Ausgeben einer Datenkarte als auch beim Einschieben des den Datenkarten als Träger zugeordneten Schlittens selbsttätig erfolgt, wobei hervorzuheben ist, daß das Eingeben einer Datenkarte ohne weiteres mit einer Hand vorgenommen werden kann und das Auflegen und Verschieben einer Datenkarte auf dem Schlitten und letztlich das Einschieben des Schlittens sowie das gleichzeitig erfolgende, gegebenenfalls durch eine geeignete Bewegung des Daumens der eingebenden Hand unterstützte Verschwenken der Blende sich in dem vorgesehenen Anwendungsmilieu als ein auch ergonomisch passendes Betätigungskonzept erweist.

Ein weiterer entscheidender Vorteil, den die Erfindung bietet, ist dadurch gegeben, daß der Schlitten in der Einlege-/Entnahmeposition lediglich um ein geringes Maß aus dem Fahrtschreiber beziehungsweise einem autonomen Lese-/Schreibaggregat herausragt, wodurch wesentlich verbesserte Voraussetzungen hinsichtlich Führungsqualität, Beschädigungssicherheit und der Aufnahme von Kräften bei der Eingabe beziehungsweise Entnahme von Datenkarten gegeben sind. Dabei ist durch eine entsprechende Ausbildung und Lagerung der Blende derart, daß sich die Innenseite der Blende im aufgeschwenkten Zustand im wesentlichen in der Ebene der Datenkartenauflage des Schlittens befindet in vorteilhafter Weise entweder eine Verlängerung der Datenkartenauflage oder eine Reduzierung des aus dem Fahrtschreiber in der Eingabe-/Entnahmeposition herausragenden Teils des Schlittens beziehungsweise eine Reduzierung des Schlittenhubes erzielbar.

Vorteilhaft ist ferner, daß die gefundene Lösung es ermöglicht, bei der Ausgabe einer Datenkarte diese zusätzlich zur Bewegung des Schlittens zu verschieben und auf diese Weise das Greifen einer Datenkarte bei deren Entnahme zu erleichtern.
Im folgenden sei die Erfindung anhand von Zeichnungen erläutert. Es zeigen:
- Figur 1: eine Frontansicht eines als Ausführungsbeispiel gewählten Fahrtschreibers,
- Figur 2: eine perspektivische Teildarstellung eines mit einer schwenkbaren Blende ausgerüsteten, in Führungsschienen gelagerten Schlittens,
- Figur 3: eine Seitenansicht des Fahrtschreibers mit in der Eingabe-/Entnahmeposition befindlichem Schlitten und einem Schnitt in der Ebene einer der Blende zugeordneten Schenkelfeder.

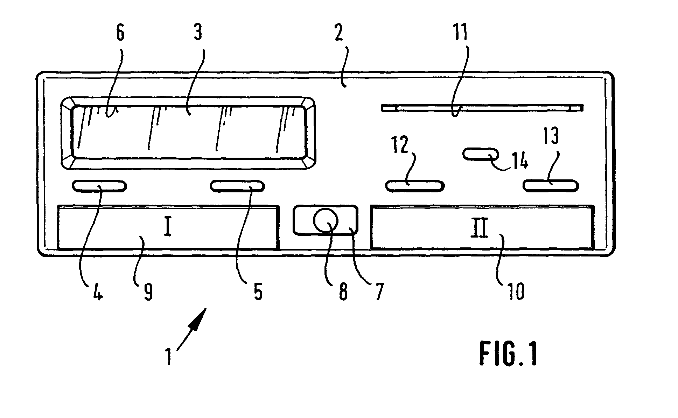

Der in Figur 1 dargestellte Fahrtschreiber 1 weist eine mit einem quaderförmigen Einbaugehäuse verbundene Frontwand 2 auf, in welcher ein Display 3 gehaltert ist sowie Tasten 4 und 5 angeordnet sind. Mit 6 ist ein dem Display 3 zugeordneter Fensterausschnitt bezeichnet; eine Abdeckung 7, welcher eine Plombe 8 zugeordnet ist, verschließt eine für Diagnose- und Parametrierzwecke vorgesehene Steckerfassung. Mit 9 und 10 sind Blenden bezeichnet, die in neuerungsgemäßer Weise die Zugangs- beziehungsweise Eingabeöffnungen von den Fahrern I und II zugeordneten Lese- und Schreibaggregaten verschließen. Ein mit 11 bezeichneter Schlitz ist für den Durchtritt des Druckträgers eines in dem Fahrtschreiber 1 angeordneten Belegdruckers vorgesehen. Weitere in der Frontwand 2 geführte beziehungsweise durch die Frontwand durchgreifende Tasten 12, 13 und 14 des Fahrtschreibers 1 dienen in Kombination mit den Tasten 4 und 5 dem Anwählen der wichtigsten Arbeitszeitdaten der Fahrer, dem Vorwärts- und Rückwärtsblättern in den Datensätzen einer angewählten Datenart, der Druckauslösung und dem Freigeben der Datenkarten.

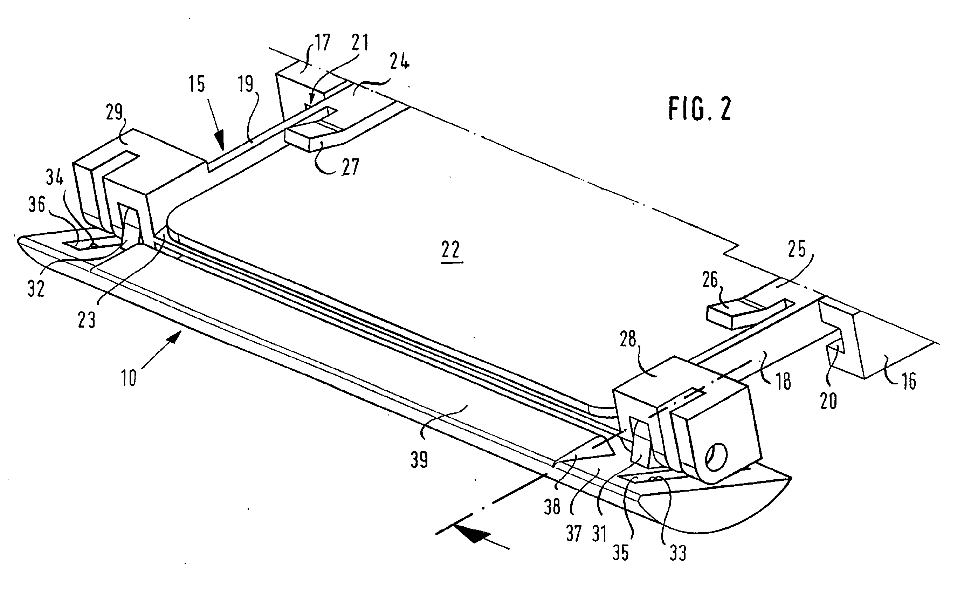

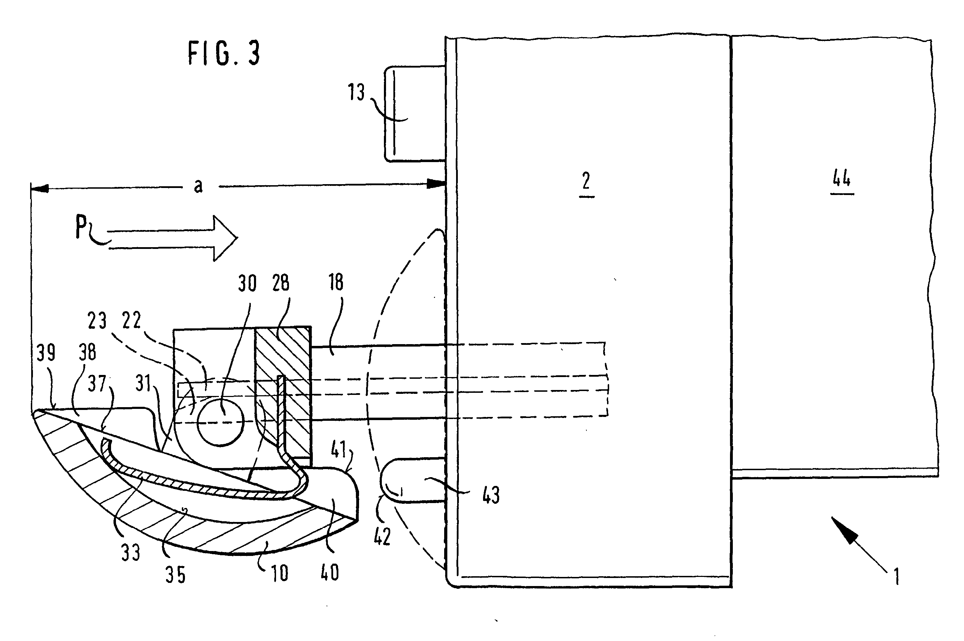

Wie aus der Figur 2 ersichtlich ist, sind in dem betreffenden Fahrtschreiber 1 für die Lagerung eines dem Transport von Datenkarten zwischen der Einlege-/Entnahmeposition und der Lese-/Schreibposition dienenden Schlittens 15 Führungsschienen 16 und 17 vorgesehen. Diese sind vorzugsweise an einer, weil nicht erfindungswesentlich nicht dargestellten, die elektronischen Bauelemente des Fahrtschreibers 1 tragenden Leiterplatte befestigt. Die Führung des Schlittens 15 erfolgt mittels an den Seitenwangen 18 und 19 des Schlittens 15 angeformter Zapfen, welche in in den Führungsschienen 16, 17 ausgebildete Nute 20 und 21 eingreifen. Mit 22 ist eine Datenkarte bezeichnet, die in den Schlitten 15, der mit einem Boden 23, den Seitenwangen 18, 19 und mit bodenparallelen Leisten 24 und 25 sozusagen als Tasche ausgebildet ist, eingesteckt ist. Als Einsteckhilfe dienen an den Leisten 24, 25 angewinkelt ausgebildete Zungen 26 und 27. Ferner sind an dem Schlitten 15 Lagerköpfe 28 und 29 angeformt, die der Aufnahme von Achsen - in Figur 3 ist eine mit 30 bezeichnet - dienen, auf denen die Blende 10 mittels an ihr angeformter Lagerschenkel 31 und 32 schwenkbar gelagert ist. Die Blende 10 steht unter der Wirkung von in geeigneter Weise geformten Schenkelfedern 33 und 34, deren eine Enden in den Lagerköpfen 28, 29 befestigt sind und deren anderen Enden in der Blende 10 ausgebildete Führungsnute 35 und 36 zugeordnet sind.

Wie aus den Figuren 2 und 3 außerdem hervorgeht, weißt die Blende 10 an ihrer Innenseite eine aus der Auflagefläche 37 herausragende Erhöhung 38 von keilförmigem Querschnitt auf, deren eine Fläche 39 bei auf geschwenkter Blende 10 sich im wesentlichen in der Ebene der Auflagefläche der Datenkarte 22 auf dem Boden 23 des Schlittens 15 befindet. Ein weiterer, die Auflagefläche 37 überragender Vorsprung 40 begrenzt im Zusammenwirken mit den Lagerköpfen 28, 29 die Drehbewegung der Blende 10 beim Verschieben des Schlittens in die in den Figuren 2 und 3 dargestellte Eingabe-/ Entnahmeposition. Dabei ist es denkbar, daß zwei Vorsprünge 40 vorgesehen, das heißt, die Vorsprünge 40 jeweils nur im Bereich der Lagerköpfe 28, 29 ausgebildet sind. Aus der Figur 3 ist ferner ersichtlich, daß an dem Vorsprung 40 eine Rundung 41 ausgebildet ist. Diese wirkt als Umlenkfläche mit der Kuppe 42 eines in der Frontwand 2 gefedert gelagerten Steges oder Bolzens 43 zusammen, wenn der Schlitten 15 in Pfeilrichtung P in die Lese-/Schreibposition geschoben wird. Dabei wird die Blende 10 zwangsweise verschwenkt. Zweckmäßigerweise sind, um das Kippmoment des Schlittens 15 auszugleichen, zwei Stege beziehungsweise Bolzen (43) vorgesehen, die mit einem möglichst großen Abstand voneinander an der Blende 10 angreifen. Anstelle von gefedert gelagerten Stegen oder Bolzen 43 ist es, damit die in geeigneter Weise ausgebildete Blende 10, beim Einschieben des Schlittens 15 selbsttätig verschwenkt wird, denkbar, unmittelbar an der Frontwand 2 des Fahrtschreibers 1 - eine Seitenwand des quaderförmigen Gehäuses ist mit 44 bezeichnet - eine Hohlkehle als Umlenkfläche auszubilden.

Der Vollständigkeit halber sei noch erwähnt, daß, damit die Auflagefläche 37 der Blende 10 bündig an der Frontwand 2 anliegt, in der Frontwand 2 der Erhöhung 38 und dem Vorsprung 40 entsprechende Senkungen vorgesehen sind. Denkbar ist ferner, daß eine Labyrinth-Dichtfunktion dadurch geschaffen wird, daß die Blende 10 insgesamt um ein gewisses Maß in der Frontwand 2 versenkt ist, wenn sich der Schlitten 15 in der Lese-/Schreibposition befindet. In der in Figur 3 dargestellten Situation ist eine Datenkarte 22 in den Schlitten 15 eingelegt. Beim nachfolgenden, handbetätigten Einschieben des Schlittens 15 in den Fahrtschreiber 1, das entgegen der Wirkung einer Feder erfolgen kann, wird die Blende 10, wenn sie nicht von Hand, beispielsweise mit dem Daumen betätigt wird, durch die vorgesehenen Mittel zwangsweise verschwenkt. Dabei wird die Vorspannung der Schenkelfedern 33, 34 erhöht und die Blende 10 kommt, wie in Figur 3 angedeutet, in Anlage mit der Frontwand 2. Gleichzeitig wird eine Verriegelung des sich dann in der Lese-/Schreibposition befindenden Schlittens 15 wirksam. Zum Ausgeben einer Datenkarte 22 beziehungsweise zum Verschieben des Schlittens 15 in die Eingabe-/Entnahmeposition wird nach entsprechender Tastenbetätigung zunächst die Verriegelung aufgehoben und nachfolgend der Schlitten 15 entweder durch die bereits erwähnte Feder verschoben oder zwangsgesteuert mittels eines motorisch angetriebenen Schiebers bewegt. Dabei können Mittel vorgesehen sein, die in der Eingabe-/Entnahmeposition des Schlittens 15 ein zusätzliches Verschieben der Datenkarte 22 bewirken, so daß diese zur Entnahme auf einfache Weise gegriffen werden kann. Die Tatsache, daß das Maß "a" in Figur 3 größenordnungsmäßig lediglich 15 mm beträgt, gestattet ein solches Verschieben der Datenkarte 22, ohne daß diese, wenn sie nicht entnommen wird, im vorgeschobenen Zustand zu weit und somit störend vom Fahrtschreiber 1 absteht.

## Patentansprüche

1. Gerät, umfassend ein Lese-/Schreibaggregat für Datenkarten (22) mit einem dem Transport der Datenkarten zwischen einer Eingabe-/Entnahmeposition und einer Lese-/Schreibposition dienenden, in seitlichen Führungen gelagerten Schlitten (15), welcher in der Eingabe-/Entnahmeposition teilweise aus einer Frontwand (2) des Gerätes herausragt und in der Lese-/Schreibposition verriegelt ist und an welchem Schlitten frontseitig eine Blende (9, 10) angeordnet ist, mit der die Durchtrittsöffnung des Schlittens (15) in der Frontwand (2) abdeckbar ist,
**dadurch gekennzeichnet,**
**daß** die Blende (9, 10) an dem Schlitten (15) schwenkbar gelagert ist.

2. Gerät nach Anspruch 1,
**dadurch gekennzeichnet,**
**daß** die Blende (9, 10) gefedert gelagert ist und ein Verschwenken der Blende (9, 10) beim Verschieben des Schlittens (15) in die Eingabe-/Entnahmeposition selbsttätig erfolgt.

3. Gerät nach Anspruch 1,
**dadurch gekennzeichnet,**
**daß** ein Verschwenken der Blende (9, 10) beim Verschrieben des Schlittens (15) in die Lese-/Schreibposition selbsttätig dadurch erfolgt,
**daß** die Blende (9, 10) mit einer an der Frontwand (2) ausgebildeten Umlenkfläche getrieblich in Wirkverbindung tritt.

4. Gerät nach Anspruch 1,
**dadurch gekennzeichnet,**
**daß** an der Blende (9, 10) eine Umlenkfläche (41) ausgebildet ist und in der Frontwand (2) wenigstens ein der Umlenkfläche (41) zugeordneter Bolzen (43) gefedert gelagert ist.

5. Gerät nach Anspruch 1 und 2,
**dadurch gekennzeichnet,**
**daß** die Blende (9, 10) derart ausgebildet ist, daß sie in der Eingabe-/Entnahmeposition des Schlittens (15) als Betätigungselement für das Verschieben des Schlittens (15) in die Lese-/Schreibposition dient.

6. Gerät nach Anspruch 1 und 2,
**dadurch gekennzeichnet,**
**daß** die Blende (9, 10) derart ausgebildet und gelagert ist, daß die Innenseite der Blende (9, 10) in der Einlege-/Entnahmeposition des Schlittens (15), in der die Blende (9, 10) unter Federwirkung an am Schlitten (15) vorgesehenen Anschlägen (28, 29) anliegt, eine Verlängerung der Datenkartenauflagefläche des Schlittens (15) bildet.

7. Gerät nach Anspruch 1,
**dadurch gekennzeichnet,**
**daß** zwischen der Blende(9, 10) und der Frontwand (2) ein elastisch verformbarer Dichtkörper vorgesehen ist.

8. Gerät nach Anspruch 1,
**dadurch gekennzeichnet,**
**daß** die Blende (9, 10) und die Frontwand (2) derart gestaltet sind, daß bei in Lese-/Schreibposition befindlichem Schlitten (15) eine Labyrinth-Dichtfunktion gegeben ist.

## Claims

1. Device, comprising a read/write assembly for data cards (22) having a carriage (15), which is used for the transport of the data cards between an intake/removal position and a read/write position, and is mounted in lateral guides, and which partially protrudes from a front wall (2) of the device in the intake/removal position and is locked in the read/write position and on which carriage a faceplate (9, 10) is frontally situated, using which the passage opening of the carriage (15) in the front wall (2) can be covered,
**characterized in that** the faceplate (9, 10) is mounted so it is pivotable on the carriage (15).

2. Device according to Claim 1,
**characterized in that** the faceplate (9, 10) is spring-loaded and pivoting of the faceplate (9, 10) occurs automatically upon displacement of the carriage (15) into the intake/removal position.

3. Device according to Claim 1,
**characterized in that** pivoting of the faceplate (9, 10) occurs automatically upon displacement of the carriage (15) into the read/write position **in that** the faceplate (9, 10) has a geared operational link with a deflection surface implemented on the front wall (2).

4. Device according to Claim 1,
**characterized in that** a deflection surface (41) is implemented on the faceplate (9, 10), and at least one bolt (43) assigned to the deflection surface (41) is spring-loaded in the front wall (2).

5. Device according to Claims 1 and 2,
**characterized in that** the faceplate (9, 10) is implemented in such a manner that it is used as the operating element for the displacement of the carriage (15) into the read/write position in the intake/removal position of the carriage (15).

6. Device according to Claims 1 and 2,
**characterized in that** the faceplate (9, 10) is implemented and mounted in such a manner that, in the insert/removal position of the carriage (15), in which the faceplate (9, 10) presses under spring action against stops (28, 29) provided on the carriage (15), the inner side of the faceplate (9, 10) forms an extension of the data card support surface of the carriage (15).

7. Device according to Claim 1,
**characterized in that** an elastically deformable sealing body is provided between the faceplate (9, 10) and the front wall (2).

8. Device according to Claim 1,
**characterized in that** the faceplate (9, 10) and the front wall (2) are designed in such a manner that when the carriage (15) is located in the read/write position, a labyrinth seal function is provided.

## Revendications

1. Appareil comprenant une unité de lecture et écriture pour cartes à puce (22) équipée d'un chariot (15) servant au transport des cartes à puce entre une position d'introduction et de restitution et une position de lecture et écriture et monté sur des guides latéraux, ledit chariot faisant, dans la position d'introduction et de restitution, partiellement saillie d'une paroi frontale (2) de l'appareil et étant verrouillé dans la position de lecture et écriture, et où, sur lequel chariot, du côté frontal, est disposé un panneau d'obturation (9, 10) qui permet de fermer l'ouverture d'introduction du chariot (15) dans la paroi frontale (2),
**caractérisé par le fait**
**que** le panneau d'obturation (9, 10) est monté en pivotement sur le chariot (15).

2. Appareil selon la revendication 1,
**caractérisé par le fait**
**que** le panneau d'obturation (9, 10) est monté d'une façon élastique et qu'un pivotement du panneau d'obturation (9, 10) se produit automatiquement lors du déplacement du chariot (15) dans la position de lecture et écriture.

3. Appareil selon la revendication 1,
**caractérisé par le fait**
**qu**'un pivotement du panneau d'obturation (9, 10) se produit automatiquement lors du déplacement du chariot (15) dans la position de lecture et écriture par le fait que le panneau d'obturation (9, 10) entre en prise avec une surface de déflection ménagée sur la paroi frontale (2).

4. Appareil selon la revendication 1,
**caractérisé par le fait**
**qu**'une surface de déflection (41) est ménagée sur le panneau d'obturation (9, 10) et que, dans la paroi frontale (2), au moins un tourillon (43) correspondant à la surface de déflection (41) est monté d'une façon élastique.

5. Appareil selon les revendications 1 et 2,
**caractérisé par le fait**
**que** le panneau d'obturation (9, 10) est conçu de manière telle que, dans la position d'introduction et de restitution du chariot (15), il sert d'organe d'actionnement pour le déplacement du chariot (15) dans la position de lecture et écriture.

6. Appareil selon les revendications 1 et 2,
**caractérisé par le fait**
**que** le panneau d'obturation (9, 10) est conçu et monté de manière telle que la face intérieure du panneau d'obturation (9, 10) forme, dans la position d'introduction et de restitution du chariot (15), dans laquelle le panneau d'obturation (9, 10) est appliqué par la force d'un ressort sur des butées (28, 29) prévues sur le chariot (15), un prolongement de la surface du chariot (15) sur laquelle reposent les cartes à puce.

7. Appareil selon la revendication 1,
**caractérisé par le fait**
**qu**'il est prévu un corps d'étanchéité à déformation élastique entre le panneau d'obturation (9, 10) et la paroi frontale (2).

8. Appareil selon la revendication 1,
**caractérisé par le fait**
**que** le panneau d'obturation (9, 10) et la paroi frontale (2) sont conçus de manière telle que, lorsque le chariot (15) se trouve dans la position de lecture et écriture, il y a une fonction d'étanchéité à labyrinthe.
